# EUROPEAN PATENT APPLICATION

(11) **EP 3 663 142 A1**
(43) Date of publication of application: **10.06.2020**
(21) Application number: 18840429.7
(22) Date of filing: 02.08.2018
(51) Int. Cl.: B60S 5/06, B60K 1/04, H01M 2/10, E05B 65/00

(54) **BATTERY BOX, BRACKET AND BATTERY BOX ASSEMBLY**

(30) Priority: 02.08.2017 CN 201710652630; 02.08.2017 CN 201710652014; 02.08.2017 CN 201710652633; 02.08.2017 CN 201710651982
(71) Applicant: Shanghai Dianba New Energy Technology Co., Ltd., Shanghai 201308 (CN); Aulton New Energy Automotive Technology Group, Shanghai 201315 (CN)
(72) Inventor: ZHANG, Jianping, Shanghai 201308 (CN); QIU, Danliang, Shanghai 201308 (CN); HUANG, Chunhua, Shanghai 201308 (CN)
(74) Representative: Haseltine Lake Kempner LLP
(86) International application number: PCT/CN2018/098250
(87) International publication number: WO 2019/024886

(57) **Abstract**

Disclosed are a battery box, a bracket and a battery box assembly. The battery box is provided with a box body and a box locking device arranged on the box body. The box locking device can be changed between a locked state and an unlocked state. The box locking device is used for cooperating with a bracket for mounting the battery box, in order to lock the battery box with respect to the bracket. The bracket is used for mounting the battery box. The bracket is provided with a bracket body and a bracket locking device arranged on the bracket body. The bracket locking device is used for cooperating with the battery box, in order to lock the battery box with respect to the bracket. A battery box assembly comprises the battery box and the bracket. According to the battery box, the bracket and the battery box assembly disclosed in the present invention, the battery box comprises the box locking device, and the bracket comprises the bracket locking device, such that the battery box can be locked with respect to the bracket, and the cooperation between the battery box and the bracket is thus more reliable.

## Description

This application claims priority of Chinese patent application CN201710652630.0, filed on August 2, 2017, Chinese patent application CN201710652014.5, filed on August 2, 2017, Chinese patent application CN201710652633.4, filed on August 2, 2017, and Chinese patent application CN201710651982.4, filed on August 2, 2017, the contents of which are incorporated herein by reference in their entirety.

### Field of invention

The present invention relates to a battery box, a bracket and a battery box assembly.

### Prior arts

With the development of the society and the improvement of the technology, electrical vehicles are more and more popular among consumers. As the power source of electrical vehicles, the battery box needs to be replaced or charged in time. The battery exchange box (battery box assembly) is composed of battery box and bracket, wherein a battery rack is placed on the bracket to implement charging the battery box. In the prior art, the battery box with a larger-size cannot be locked accurately, which makes the cooperation between the battery box and the bracket unreliable.

### Content of the present invention

The technical problem to be solved in the present invention is for overcoming the defect of unreliable cooperation between battery box and bracket in prior art, hence providing a battery box, a bracket and a battery box assembly.

The present invention solves the above-mentioned technical problems through the following technical solutions:
A battery box, the battery box is provided with a box body and a box locking device arranged on the box body, wherein the box locking device can be changed between a locking state and an unlocking state, and wherein the box locking device is used for cooperating with a bracket for mounting the battery box, in order to lock the battery box with respect to the bracket.

A bracket, the bracket is used for mounting the battery box, wherein the bracket is provided with a bracket body and a bracket locking device arranged on the bracket body, and wherein the bracket locking device is used for cooperating with the battery box in order to lock the battery box with respect to the bracket.

A battery box assembly, the battery box assembly comprises the battery box and the bracket as described above, wherein the box locking device is cooperated with the bracket locking device.

The positive improved effects of this invention are:
According to the battery box, the bracket and the battery box assembly disclosed in present invention, the battery box comprises the box locking device, and the bracket comprises the bracket locking device, such that the battery box can be locked with respect to the bracket, and the cooperation between the battery box and the bracket is thus more reliable.

### Brief description of the drawings

Fig. 1 is a three-dimensional diagram of the battery box assembly in the embodiment 1 of the present invention.
Fig. 2 is a three-dimensional diagram (I) of the battery box in the embodiment 1 of the present invention.
Fig. 3 is a partial enlarged diagram of Part A in Fig. 2.
Fig. 4 is a partial enlarged diagram of Part B in Fig. 2.
Fig. 5 is a three-dimensional diagram (II) of the battery box in the embodiment 1 of the present invention.
Fig. 6 is a partial enlarged diagram of Part C in Fig. 5.
Fig. 7 is a partial enlarged diagram of Part D in Fig. 5.
Fig. 8 is a three-dimensional diagram (III) of the battery box in the embodiment 1 of the present invention.
Fig. 9 is a three-dimensional diagram (I) of the bracket in the embodiment 1 of the present invention.
Fig. 10 is a partial enlarged diagram of Part E in Fig. 9.
Fig. 11 is a three-dimensional diagram (II) of the bracket in the embodiment 1 of the present invention.
Fig. 12 is a partial enlarged diagram of Part F in Fig. 11.
Fig. 13 is a structure diagram of the battery exchange box in the embodiment 2 of the present invention.
Fig. 14 is an internal structure diagram of the electrical connector of the battery exchange box in the embodiment 2 of the present invention.
Fig. 15 is a structure diagram of the bracket and the electrical connector vehicle side of the battery exchange box in the embodiment 2 of the present invention.
Fig. 16 is a structure diagram of the box body and the electrical connector battery side of the battery exchange box in the embodiment 2 of the present invention.
Fig. 17 is a structure diagram of the electrical connector battery side of the battery exchange box in the embodiment 2 of the present invention.
Fig. 18 is a section view diagram in the direction of A-A in Fig. 17.
Fig. 19 is a partial enlarged diagram of Part B in Fig. 18.
Fig. 20 is a three-dimensional diagram of the battery box assembly in the embodiment 3 of the present invention.
Fig. 21 is a three-dimensional diagram (I) of the battery box in the embodiment 3 of the present invention.
Fig. 22 is a partial enlarged diagram of Part A in Fig. 21.
Fig. 23 is a three-dimensional diagram (II) of the battery box in the embodiment 3 of the present invention.
Fig. 24 is a partial enlarged diagram of Part B in Fig. 23.
Fig. 25 is a three-dimensional diagram (III) of the battery box in the embodiment 3 of the present invention.
Fig. 26 is a three-dimensional diagram of the bracket in the embodiment 3 of the present invention.
Fig. 27 is a structure diagram of the bracket in the embodiment 4 of the present invention.
Fig. 28 is a partial enlarged diagram of Part A in Fig. 27.
Fig. 29 is a structure diagram of the bracket from another view in the embodiment 4 of the present invention.
Fig. 30 is a partial enlarged diagram of Part B in Fig. 29.

### Label description of drawings:

### Embodiment 1:

- 10:: Battery box assembly
- 100:: Battery box
- 110:: Box body
- 111:: Front of the box
- 112:: Back of the box
- 113:: Top of the box
- 114:: Bottom of the box
- 115:: Left of the box
- 116:: Right of the box
- 120:: Box locking device
- 121:: Locking bolt
- 130:: Unlocking device
- 131:: Unlocking sucker
- 140:: Safety locking device
- 141:: Rotating shaft
- 150:: Box limiting part
- 151:: Box limiting part in front X direction
- 152:: Box limiting part in front Z direction
- 153:: Box limiting part in rear YZ direction
- 1531:: Box limiting plane in rear Y direction
- 1532:: Box limiting plane in rear Z direction
- 160:: Box electrical connection device
- 170:: Box bottom guide rail
- 200:: Bracket
- 210:: Bracket body
- 220:: Bracket locking device
- 250:: Bracket limiting part
- 251:: Bracket limiting part in front X direction
- 2511:: Bracket elastic part in front X direction
- 252:: Bracket limiting part in front Z direction
- 2521:: Bracket groove in front Z direction
- 2522:: Bracket elastic part in front Z direction
- 253:: Bracket limiting part in rear X direction
- 2531:: Bracket limiting roller in rear X direction
- 254:: Bracket limiting part in rear YZ direction
- 2541:: Bracket groove in rear YZ direction
- 2542:: Bracket elastic part in rear Y direction
- 2543:: Bracket limiting roller in rear Z direction
- 260:: Bracket electrical connection device
- 270:: Bracket bottom guide roller

### Embodiment 2:

- 10:: Electrical connector
- 20:: Box body
- 30:: Bracket
- 1:: Electrical connector battery side
- 11:: High-voltage terminal
- 111:: Containing cavity
- 12:: Conductive elastomer
- 121:: Pressing part
- 122:: Contacting part
- 13:: Positioning rod
- 14:: Low-voltage terminal
- 15:: Cover body
- 2:: Electrical connector vehicle side
- 21:: High-voltage pole
- 211:: Abutting part
- 212:: Connecting part
- 22:: Groove
- 23:: Housing
- 24:: Sealing ring
- 25:: Low-voltage pole
- 26:: Socket
- 27:: High-voltage plug

### Embodiment 3:

- 10:: Battery box assembly
- 100:: Battery box
- 110:: Box body
- 111:: Front of the box
- 112:: Back of the box
- 113:: Top of the box
- 114:: Bottom of the box
- 115:: Left of the box
- 116:: Right of the box
- 121X:: Limiting part in front X direction
- 122X:: Limiting part in rear X direction
- 121Y:: Limiting part in front Y direction
- 122Y:: Limiting part in rear Y direction
- 121Z:: Limiting part in front Z direction
- 122Z:: Limiting part in rear Z direction
- 130:: Locking device
- 140:: Unlocking device
- 150:: Safety locking device
- 160:: Guide rail
- 161:: Guide rib
- 170:: Electrical connection device
- 180:: Explosion-proof valve
- 200:: Bracket

### Embodiment 4:

- 1:: Base
- 11:: Guide wheel
- 12:: Guide groove
- 2:: Back-end wall
- 21:: Electrical connection device
- 3:: Side wall
- 31:: Limiting holder
- 32:: Side guide wheel group
- 4:: Limiting unit in front X direction
- 41:: Gasket
- 42:: Spring piece
- 5:: Limiting unit in front Y direction
- 6:: Limiting unit in front Z direction
- 7:: Limiting unit in rear X direction
- 71:: Pulley
- 72:: Elastic support
- 8:: Limiting unit in rear Y direction
- 9:: Limiting unit in rear Z direction
- 91:: Roller
- 92:: Elastic block

### Detailed description of the preferred embodiment

The following embodiments further illustrate the present invention, but the present invention is not limited by the following embodiments thereto.

### Embodiment 1

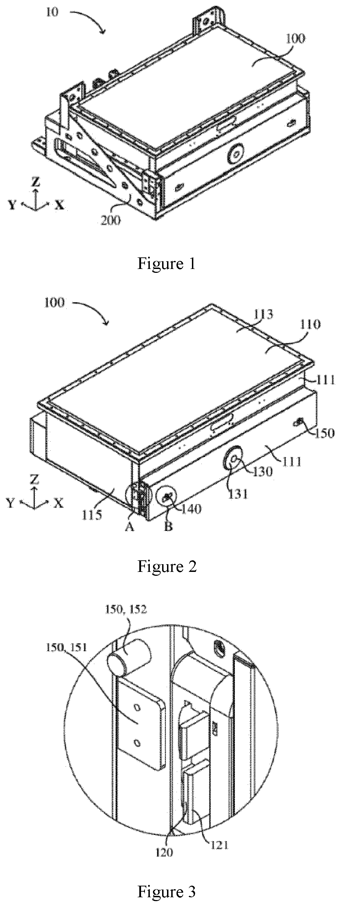

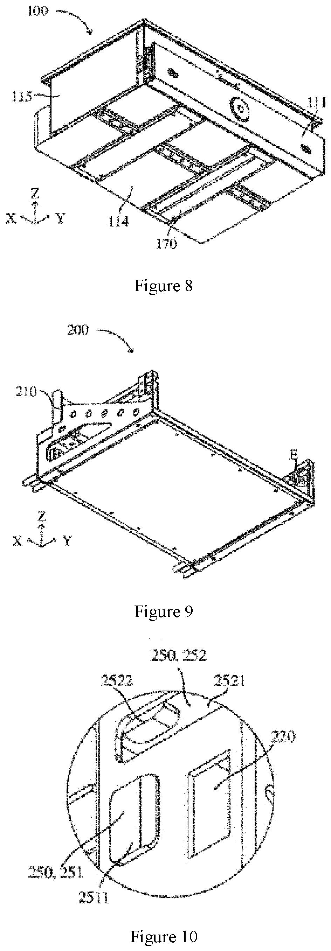

As shown in Fig. 1, the battery box assembly 10 comprises of a battery box 100 shown in Figs. 2-8 and a bracket 200 shown in Figs. 9-12.

The battery box 100 is provided with a box body 110 and a box locking device 120 arranged on the box body 110, wherein the box locking device 120 can be changed between a locking state and an unlocking state, and wherein the box locking device 120 is used for cooperating with the bracket 200 for mounting the battery box 100, in order to lock the battery box 100 with respect to the bracket 200.

The bracket 200 is used for mounting the battery box 100, wherein the bracket 200 is provided with a bracket body 210 and a bracket locking device 220 arranged on the bracket body 210, and wherein the bracket locking device 220 is used for cooperating with the battery box 100, in order to lock the battery box 100 with respect to the bracket 200.

The box locking device 120 is cooperated with the bracket locking device 220. The battery box 100 can be locked with respect to the bracket 200, and the cooperation between the battery box 100 and the bracket 200 is thus more reliable.

As shown in Fig. 2, Fig. 5 and Fig. 8, the box body 110 comprises: front of the box 111, back of the box 112, top of the box 113, bottom of the box 114, left of the box 115 and right of the box 116. The left of the box 115 and the right of the box 116 are opposite with each other in X direction, and the front of the box 111 and the back of the box 112 are opposite with each other in Y direction, and the top of the box 113 and the bottom of the box 114 are opposite with each other in Z direction.

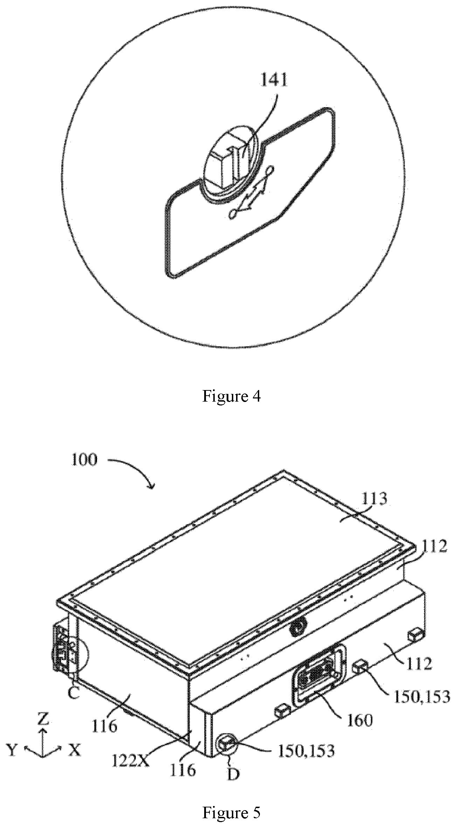

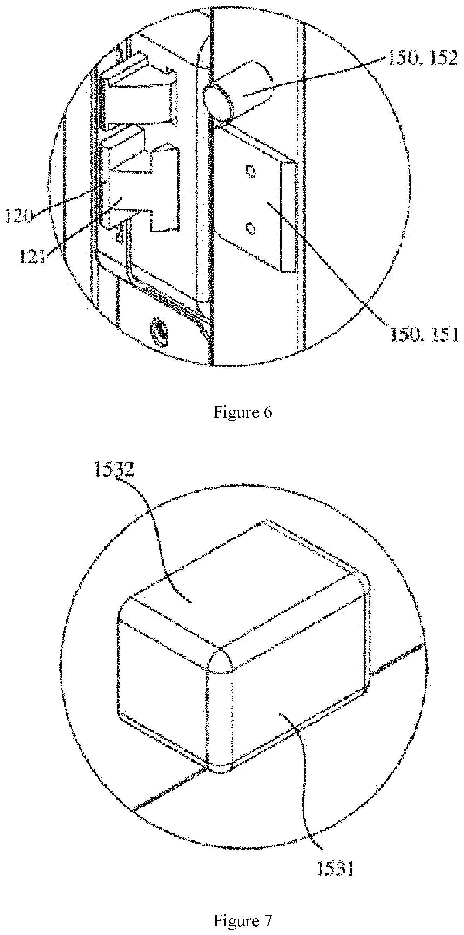

Specifically, as shown in Fig. 3 and Fig. 6, the box locking device 120 is configured to be protruded to the box body 110 in the locking state. The box locking device 120 comprises a locking bolt 121 which can be elastically stretched out and retracted into the box body 110, wherein the box locking device 120 is in locking state when the locking bolt 121 elastically stretches out the box body 110. The box locking device 120 is in unlocking state when the locking bolt 121 is elastically retracted into the box body 110. The opposite sides of the box body 110 are both provided with box locking device 120. Wherein, Fig. 3 is a partial enlarged diagram of Part A in Fig. 2, in which it illustrates the box locking device 120 on the left side of the box body 110; Fig. 6 is a partial enlarged diagram of Part C in Fig. 5, in which it illustrates the box locking device 120 on the right side of the box body 110; the left side is symmetric with the right side. The bracket locking device 220 is a groove provided on the bracket body 210. The two opposite inner sides of the bracket body 210 are both provided with bracket locking device 220. Fig. 10 is a partial enlarged diagram of Part E in Fig. 9, in which it illustrates the bracket locking device 220 on the inner right side of the bracket body 210, while the bracket locking device 220 is also provided on the inner left side of the bracket body 210, wherein the left side is symmetric with the right side.

In the process of pushing the battery box 100 into the bracket 200 from the front to the back for locking, the inclined surface of the locking bolt 121 (which can be seen in Fig. 6) is exerted a force from the bracket body 200, and the locking bolt 121 is elastically retracted into the box body 110, and until the locking bolt 121 reaches the bracket locking device 220, the locking bolt 121 is elastically stretched out of the box body 110 and is contained within the bracket locking device 220 (i.e. the groove). At this time, if the battery box 100 is further pulled forward, the locking bolt 121 is limited in the bracket locking device 220, and the battery box 100 will not be pulled out to implement locking.

The battery box 100 is also provided with an unlocking device 130 for linking of the box locking device 120 to change the box locking device 120 from the locking state to the unlocking state. Specifically, the unlocking device 130 comprises of an unlocking sucker 131, an unlocking rod (not shown), and a linkage mechanism (not shown), wherein the unlocking sucker 131 is connected with the unlocking rod, and the unlocking rod is connected with the box locking device 120 through the linkage mechanism. The unlocking sucker 131 is preferably an electromagnetic sucker, and belongs to a press type (or an adsorption type) unlocking. Operating the electromagnetic sucker, it drives the unlocking rod and the linkage mechanism, and then link the box locking device 120, such that the locking bolt 121 is elastically retracted into the inside of the box body 110.

The battery box 100 is also provided with a safety locking device 140 for limiting the box locking device 120 being changed from the locking state to the unlocking state. It avoids the serious accident that the box locking device 120 loses efficacy or the box body 110 slips due to the interference from external factors. Specifically, as shown in Fig. 4, the safety locking device 140 comprises a rotating shaft 141, and the rotating shaft 141 is connected with the box locking device 120. The rotating shaft 141 can be turned in two directions (clockwise, anticlockwise), wherein when the rotating shaft 141 is rotated to a position, the box locking device 120 is locked deadly (such as clamping, jacking, etc.), and wherein the box locking device 120 is limited to be changed from the locking state to the unlocking state. When the rotating shaft 141 is rotated to another position, the box locking device 120 can be changed from the locking state to the unlocking state under the control of the unlocking device 130.

The battery box 100 is also provided with a plurality of box limiting parts 150, wherein the limiting parts 150 are used for cooperating with the bracket 200 for mounting the battery box 100, and wherein after the battery box 100 is mounted on the bracket 200, the box limiting parts 150 are used to limit the movement of the battery box 100 with respect to the bracket 200 in multiple directions. The box limiting parts 150 are rigid body, and preferably are made of metal. The bracket 200 is also provided with a plurality of bracket limiting parts 250 for cooperating with the battery box 100, wherein after the battery box 100 is mounted on the bracket 200, the bracket limiting parts 250 are used to limit the movement of the battery box 100 with respect to the bracket 200 in multiple directions. The box limiting parts 150 are cooperated with the bracket limiting parts 250 to implement the limitation of the battery box 100 with respect to the bracket 200.

Specifically, as shown in Fig. 3 and Fig. 6, the box limiting parts 150 comprise a box limiting part in front X direction 151 and a box limiting part in front Z direction 152. After the battery box 100 is mounting on the bracket 200, the box limiting part in front X direction 151 is used to limit the movement of the battery box 100 in X direction with respect to the bracket 200, wherein the box limiting part in front Z direction 152 is used to limit the movement of the battery box 100 in Z-direction with respect to the bracket 200. The X direction is perpendicular to the Z-direction. The X direction is horizontal direction and the Z-direction is vertical direction.

The box limiting part in front X direction 151 and the box limiting part in front Z direction 152 are both convex parts, and the box limiting part in front X direction 151 and the box limiting part in front Z direction 152 are both arranged on the side of the box body 110. The two opposite sides of the box body 110 are both provided with a box limiting part in front X direction 151 and a box limiting part in front Z direction 152. Wherein, Fig. 3 is a partial enlarged diagram of Part A in Fig. 2, and it illustrates the box limiting part in front X direction 151 and the box limiting part in front Z direction 152 on the left side of box body 110; Fig. 6 is a partial enlarged diagram of Part C in Fig. 5, and it illustrates the box limiting part in front X direction 151 and the box limiting part in front Z direction 152 on the right side of box body 110; and the left side is symmetric with the right side. The box limiting part in front Z direction 152 is a cylinder, and the end of the cylinder is fixed on the side (left of the box 115 and right of the box 116) of box body 110.

The bracket limiting part 250 comprises a bracket limiting part in front X direction 251 and a bracket limiting part in front Z direction 252. After the battery box 100 is mounted on the bracket 200, the bracket limiting part in front X direction 251 is used to limit the movement of the battery box 100 in X direction with respect to the bracket 200, and the bracket limiting part in front Z direction 252 is used to limit the movement of the battery box 100 in Z direction with respect to the bracket 200. As shown above, the X direction is perpendicular to the Z direction.

The two opposite inner sides of the bracket body 210 are provided with a bracket limiting part in front X direction 251 and a bracket limiting part in front Z direction 252. Fig. 10 is a partial enlarged diagram of Part E in Fig. 9, and it illustrates the bracket limiting part in front X direction 251 and the bracket limiting part in front Z direction252 on the inner right side of the bracket body 210; the left side of the bracket body 210 is also provided with the bracket limiting part in front X direction 251 and the bracket limiting part in front Z direction 252; both sides are symmetrical.

The bracket front X-direction limiting 251 comprises a bracket elastic part in front X direction 2511, wherein the bracket elastic part in front X direction 2511 is protruded on the bracket body 210. The bracket elastic part in front X direction 2511 is used for being pressed contacting with the battery box 100. The bracket elastic part in front X direction 2511 preferably comprises a stacked teflon sheet (or the sheet made of other plastics) and a compression pad, wherein the teflon sheet directly contacts with the bracket limiting part in front X direction 151. The surface friction coefficient of teflon sheet is low, which is conducive to the movement of the box limiting part in front X direction 151, and when the teflon sheet contacts with the rigid box limiting part in front X direction 151, there will be no rigid collision, which is not easy to cause damage; the compression pad is preferably made of materials with high elastic deformation coefficient, such as silica gel. The elastic deformation of the bracket elastic part in front X direction 2511 mainly depends on the compression sheet. The bracket elastic parts in front X direction 2511 on both sides are pressed contacting with the box limiting part in front X directions 151 on both sides respectively, in order to implement the limitation on left and right sides of X direction.

The bracket limiting part in front Z direction 252 comprises a bracket groove in front Z direction 2521 and a bracket elastic part in front Z direction 2522 arranged in the bracket groove in front Z direction 2521. The bracket elastic part in front Z direction 2522 is used for being pressed contacting with the battery box 100. In the process of pushing the battery box 100 into the bracket 200 from the front to the back, the box limiting part in front Z direction 152 enters the bracket groove in front Z direction 2521 from the front, until the box limiting part in front Z direction 152 is pressed contacting with the bracket elastic part in front Z direction 2522, and the bracket elastic part in front Z direction 2522 applies a vertical downward pressure on the box limiting part in front Z direction 152, in order to implement the limitation in Z direction. Similar to the bracket elastic part in front X direction 2511, the bracket elastic part in front Z direction 2522 preferably comprises a plastic sheet and a compression sheet, and the plastic sheet is contacted with the outer cylinder surface of the box limiting part in front Z direction 152, and the elastic deformation is mainly implemented by the compression sheet.

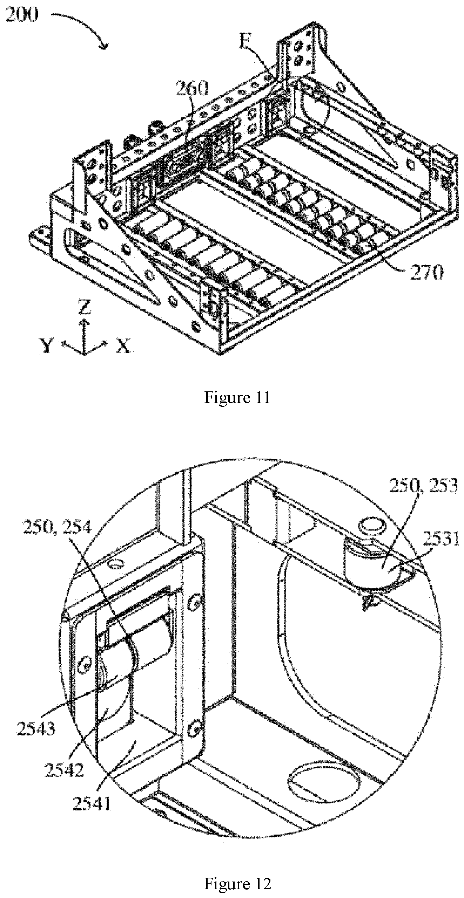

The bracket limiting part 250 comprises a bracket limiting part in rear X direction 253, which is used to limit the movement of the battery box 100 in X direction with respect to the bracket 200. The bracket limiting part in rear X direction 253 comprises the bracket limiting roller in rear X direction 2531, which is used to be pressed contacting with the battery box 100. The bracket limiting roller in rear X direction 2531 can be rotated around Z direction. Fig. 12 is a partial enlarged diagram of Part F in Fig. 11, and it illustrates the bracket limiting part in rear X direction 253 on the inner right side of the bracket body 210; the left side of the bracket body 210 is also provided with the bracket limiting part in rear X direction 253; both sides are symmetrical. The bracket limiting roller in rear X direction 2531 can be directly pressed contacting with box body 110 to implement the limitation in X direction.

The box limiting part 150 also comprises box limiting part in rear YZ direction 153, and after the battery box 100 is mounted to the bracket 200, the box limiting part in rear YZ direction 153 is used to limit the battery box 100 to move in Y direction and Z direction with respect to the bracket 200, and the Y direction is perpendicular to the Z direction. As shown in Fig. 5 and Fig. 7, the box limiting part in rear YZ direction 153 is a convex part, and the box limiting part in rear YZ direction 153 is arranged at the back of the box body 110, which is back side of the box 112. The back side of the box 112 is provided with a plurality of limiting parts in rear YZ direction 153. In this embodiment, specifically there are four. The function for limitation in rear Y direction is the rear surface of the convex part, i.e. the box limiting plane in rear Y direction 1531; the function for limitation in rear Z direction is the upper surface of the convex part, i.e. the box limiting plane in rear Z direction 1532.

The bracket limiting part 250 comprises bracket limiting part in rear YZ direction 254. After the battery box 100 is mounted to the bracket 200, the bracket limiting part in rear YZ direction 254 is used to limit the movement of the battery box 100 in Y direction and Z direction with respect to the bracket 200. The Y direction is perpendicular to the Z-direction, and the Y direction is horizontal, and the Z direction is vertical. The bracket limiting part in rear YZ direction 254 is arranged at the inner back side of the bracket body 210. The bracket limiting part in rear YZ direction 254 comprises the bracket groove in rear YZ direction 2541, the bracket limiting part in rear Y direction and the bracket limiting part in rear Z direction which are provided in the bracket groove in rear YZ direction 2541, wherein the bracket limiting part in rear Y direction and the bracket limiting part in rear Z direction are used for be pressed contacting with the battery box 100. The bracket limiting part in rear Y direction comprises the bracket elastic part in rear Y direction 2542, and the bracket limiting part in rear Z direction comprises the bracket limiting roller in rear Z direction 2543, and the bracket elastic part in rear Y direction 2542 and the bracket limiting roller in rear Z direction 2543 are both used for be pressed contacting with the battery box 100. Specifically, the bracket elastic part in rear Y direction 2542 is pressed contacting with the box limiting plane in rear Y direction 1531, and the bracket elastic part in rear Y direction 2542 applies a forward force along Y direction to the box limiting plane in rear Y direction 1531, which restricts the battery box 100 to continue to push backward. The bracket limiting roller in rear Z direction 2543 is pressed contacting with the box limiting plane in rear Z direction 1532, and the bracket limiting roller in rear Z direction 2543 applies a vertical downward force to the box limiting plane in rear Z direction 1532, in order to prevent the battery box 100 from moving along Z direction.

In addition, the battery box 100 is also provided with a box electrical connection device 160 as shown in Fig. 5 and a box bottom guide rail 170 as shown in Fig. 8. The bracket 200 is also provided with a bracket electrical connection device 260 as shown in Fig. 9 and a bracket bottom guide roller 270 as shown in Fig. 11. The box electrical connection device 160 is electrically connected with the bracket electrical connection device 260, and the box bottom guide rail 170 can be slid on the bracket bottom guide roller 270.

In general, the battery box 100 is pushed into the bracket 200 from front to back along Y direction, and the box bottom guide rail 170 can be slid on the bracket bottom guide roller 270, with less resistance; the bracket limiting part in rear YZ direction 254 is contacted with the box limiting part in rear YZ direction 153, so as to prevent the battery box 100 from further pushing in; at this time, the left and right sides of the bracket limiting part in rear X direction 253 clamps the box body 110; the bracket limiting part in front X direction 251 is contacted with the box limiting part in front X direction 151 and clamps the battery box 100 from the left and right sides; the bracket limiting part in front Z direction 252 is contacted with the box limiting part in front Z direction 152, in order to prevent the battery box 100 from moving up and down along Z direction; the locking bolt 121 of the box locking device 120 is located in the bracket locking device 220, and the battery box 100 cannot be moved forward; screw the safety locking device 140, and the fixation is completed. When it is necessary to take out the battery box 100, screw the safety locking device 140 to relieve the safety lock; operate the unlocking device 130 such that the locking bolt 121 of the box locking device 120 can be elastically retracted; pull the battery box 100 such that it can be moved forward from the back to the front along the Y direction; finally take out the battery box 100 from the bracket 200. The whole process is fast, accurate and highly automated.

### Embodiment 2

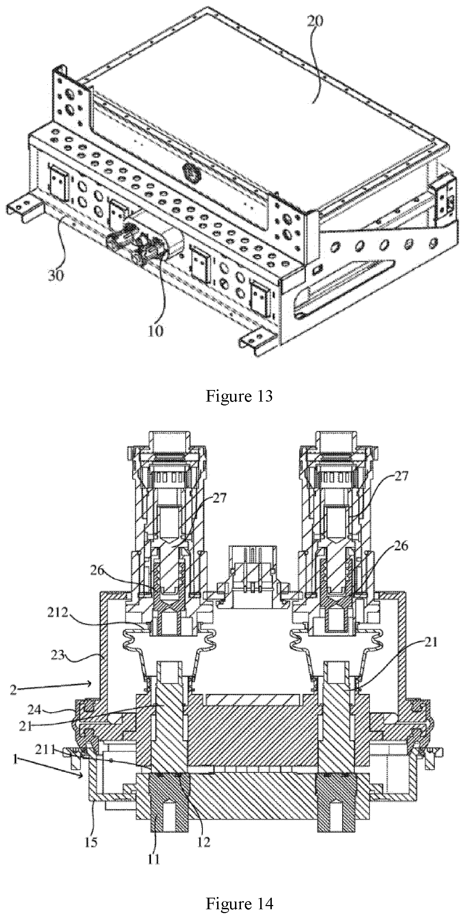

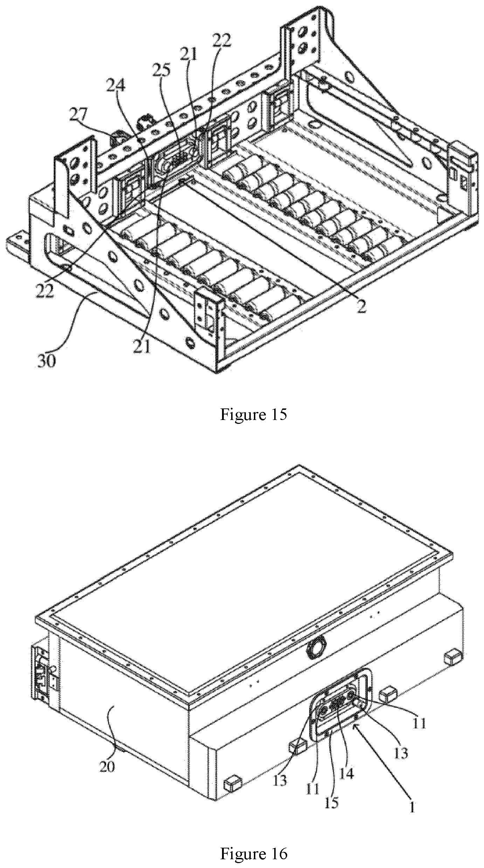

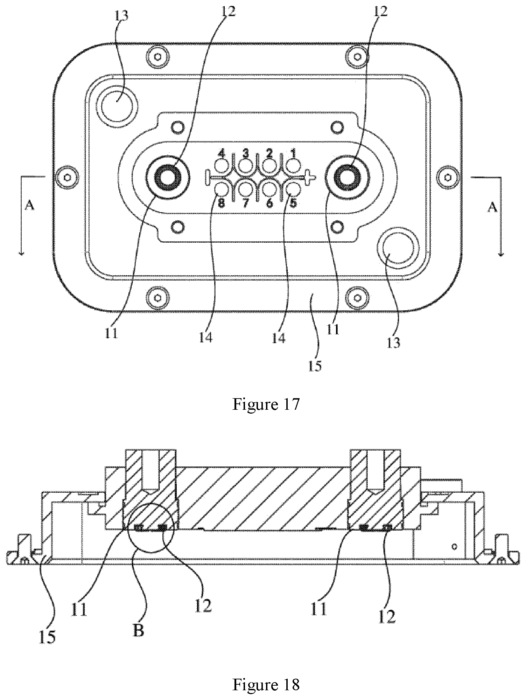

As shown in Fig. 13 to Fig. 19, embodiment 2 provides a battery exchange box, which comprises an electrical connector 10, a box body 20 and a bracket 30, wherein the electrical connector 10 comprises an electrical connector battery side 1 and an electrical connector vehicle side 2, wherein the electrical connector battery side 1 is mounted on the box body 20 and the electrical connector vehicle side 2 is mounted on the bracket 30. The box body 20 is mounted on the bracket 30, wherein the electrical connector battery side 1 is electrically connected with the electrical connector vehicle side 2, and the electricity output to the commercial vehicle is implemented through the electrical connection between the electrical connector battery side 1 and the electrical connector vehicle side 2. The electrical connector 10 can also be applied to the battery box from embodiment 1.

The electrical connector vehicle side 2 comprises a high-voltage pole 21, and the electrical connector battery side 1 comprises a high-voltage terminal 11, and the high-voltage pole 21 is electrically connected with the high-voltage terminal 11, and at least one conductive elastomer 12 is pressed between the high-voltage pole 21 and the high-voltage terminal 11. The conductive elastomer 12 is used to maintain the electrical connection when floating between the high voltage pole 21 and the high voltage terminal 11, which effectively avoid the unusual issue of the electrical connection failure or burning caused the like caused by loose connection, and improve the stability of the electrical connection in the electrical connector 10.

One side of the high-voltage terminal 11 facing to the high-voltage pole 21 may be provided with at least one containing cavity 111, wherein the conductive elastomer 12 is located in the containing cavity 111, and the conductive elastomer 12 is squeezed and fixed in the containing cavity 111 by the high-voltage pole 21 and the high-voltage terminal 11 of the electrical connector battery side 1. When the electrical connector 10 is in use, the high-voltage pole 21 is electrically connected with the high-voltage terminal 11, wherein the conductive elastomer 12 is squeezed by external force and thus be deformed, wherein the conductive elastomer 12 is tightly pressed and is provided in the containing cavity 111, such that effectively prevent the conductive elastomer 12 from being offset and falling off, and ensure the implementation of floating connection between the high-voltage pole 21 and the high-voltage terminal 11. Also the containing cavity 111 can reserve space for the deformation of the conductive elastomer 12, such that effectively prevent the damage of the conductive elastomer 12. At the same time, the conductive elastomer 12 is arranged on the high-voltage terminal 11 of the electrical connector battery side 1 in the box body 20, which is convenient for the detection device to detect the electrical connection effect of the conductive elastomer 12, and also is convenient for the maintenance and replacement of the conductive elastomer 12.

The two ends of the conductive elastomer 12 can be respectively provided with a pressing part 121 and a contacting part 122, wherein the pressing part 121 is pressed and mounted within the containing cavity 111. Wherein, the pressing part 121 and the containing cavity 111 can be interference fit, that is, the conductive elastomer 12 and the containing cavity 111 is interference fit, such that strengthen the connection strength between the conductive elastomer 12 and the high-voltage terminal 11. The contacting part 122 is exposed on the outer surface of the high-voltage terminal 11 and is abutted to the high-voltage pole 21. Preferably, the conductive elastomer 12 can be a conductive spring, which has high elasticity and good performance, and is easy to be restored to the original state after removing the external force.

In order to improve the stability effect of the electrical connection of the electrical connector 10, the electrical connector battery side 1 can comprise a positioning rod 13, and the electrical connector vehicle side 2 can comprise a groove 22, wherein the positioning rod 13 is inserted into the groove 22. The groove 22 and the positioning rod 13 is functioned as positioning, so that when the box body 20 is mounted on the bracket 30, the electrical connection can be implemented between the electrical connector battery side 1 and the electrical connector vehicle side, and effectively prevent the electrical connector battery side 1 from being offset and dislocation, and improve the stability of the electrical connection of the electrical connector 10.

The electrical connector vehicle side 2 can comprise a housing 23 and a sealing ring 24, wherein the sealing ring 24 is provided on the housing 23, and the high-voltage pole 21 is passed through and is connected within the housing 23. The electrical connector battery side 1 may comprise a cover body 15, the high-voltage terminal 11 is passed through and is connected within the cover body 15, and the cover body 15 is abutted to the sealing ring 24. The sealing ring 24 prevents the external water and impurities from entering the interior of the housing 23 and the cover body 15, which further improve the stability of the electrical connection between the high-voltage terminal 11 and the high-voltage pole 21.

Wherein, the electrical connector battery side 1 can comprise a low-voltage terminal 14, wherein the low-voltage terminal 14 is passed through and is connected within the cover body 15, and the electrical connector vehicle side 2 can comprise a low-voltage pole 25, wherein the low-voltage pole 25 is passed through and is connected within the housing 23, and the low-voltage pole 25 and the low-voltage terminal 14 are electrically connected. So that the low-voltage pole 25 and the low-voltage terminal 14 are located inside the sealing ring 24.

The two ends of the high-voltage pole 21 along the axial direction can be respectively provided with an abutting part 211 and a connecting part 212, wherein the connecting part 212 is passed through and is connected within the housing 23. The abutting part 211 is exposed to the outer surface of the housing 23, that is, one end of the high-voltage pole 21 close to the high-voltage terminal 11 is exposed to the outer surface of the housing 23, wherein the butting end surface of the abutting part 211 is flat, and the abutting part 211 is used for being abutted and connected to the high-voltage terminal 11.

The electrical connector vehicle side can comprise a socket 26, wherein one end of the socket 26 is electrically connected to the high-voltage pole 21, and the other end of the socket 26 is used for electrically connecting the high-voltage plug 27, so as to implement the electrical connection between the high-voltage pole 21 and the high-voltage plug 27. Preferably, the two ends of the socket 26 can be respectively provided with a cavity (not shown in the figure), wherein the high-voltage pole 21 and the high-voltage plug 27 are respectively inserted within the two cavities, which are convenient for insertion and installation, and can implement quick separation electrical connection.

Wherein a conductive spring can be pressed and is provided between the high-voltage plug 27 and the socket 26, wherein the floating electrical connection between the high-voltage plug 27 and the socket 26 is implemented by the conductive spring, which improves the stability of the electrical connection between the high-voltage plug 27 and the socket 26. Certainly, a conductive spring can also be pressed and is provided between the high-voltage pole 21 and the socket 26 to improve the stability of the electrical connection between the high-voltage pole 21 and the socket 26.

### Embodiment 3

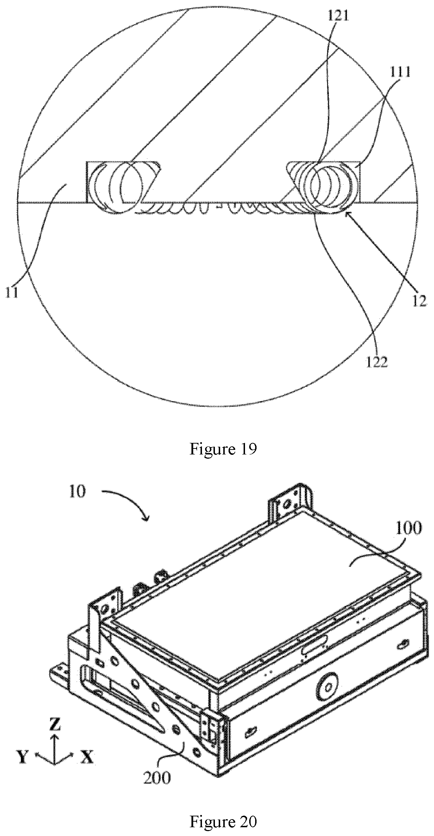

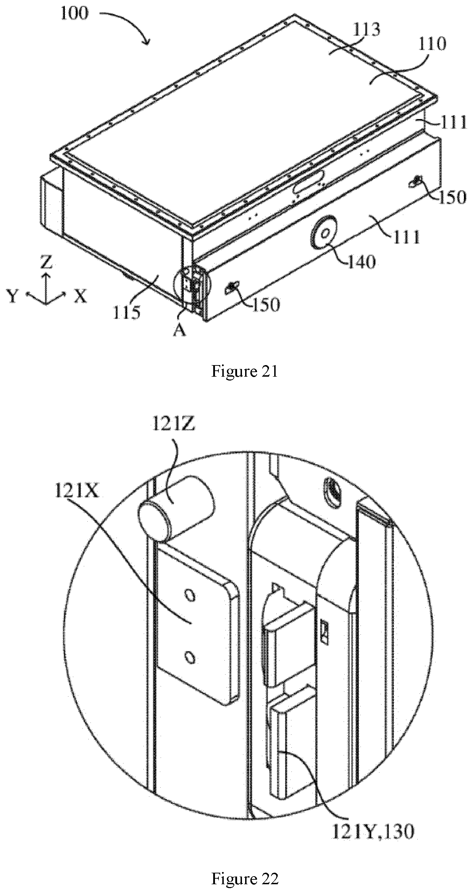

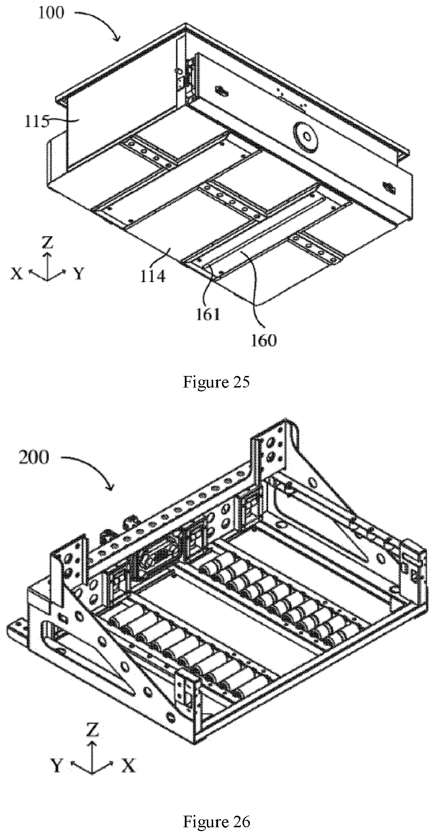

As shown in Fig. 20, the battery box assembly 10 comprises a battery box 100 as shown in Figs. 21-25 and a bracket 200 as shown in Fig. 26, wherein the battery box 100 is mounted to the bracket 200.

The battery box 100 is provided with a box body 110 and a plurality of limiting parts arranged on the box body 110. The limiting parts are used for cooperating with the bracket 200 for mounting the battery box 100, in order to implement the limitation of the battery box 100 with respect to the bracket 200. The plurality of limiting parts comprises: limiting parts in X direction, the limiting parts in Y direction and limiting parts in Z direction. The limiting part in X direction is used to limit the movement of the battery box 100 in X direction with respect to the bracket 200; the limiting part in Y direction is used to limit the movement of the battery box 100 in Y direction with respect to the bracket 200; the limiting part in Z direction is used to limit the movement of the battery box 100 in Z direction with respect to the bracket 200. The X direction, Y direction and Z direction are perpendicular to each other. The X direction and Y direction are both horizontal, and the Z-direction is vertical, wherein implement the limitation in X direction, Y direction and Z direction, which can quickly and accurately position the battery box 100 with respect to the bracket 200, such that the cooperation between the battery box 100 and the bracket 200 more reliable, and facilitate the automatic installation. The limiting parts from this embodiment can also be applied to the battery box from embodiment 1.

As shown in Fig. 21, Fig. 23 and Fig. 25, box body 110 comprises front of the box 111, back of the box 112, top of the box 113, bottom of the box 114, left of the box 115 and right of the box 116. The left of the box 115 and the right of the box 116 are configured in X direction, and the front of the box 111 and the of the box side 112 are configured in Y direction, and the top of the box 113 and the bottom of the box 114 are configured in Z direction. The box body 110 is preferably a platinum piece. It can enhance the protection level of the battery box 100.

In this embodiment, part of the limiting parts are protruded to the box body 110, which means are protruded to each side of the box body 110, so as to facilitate the cooperation of the limiting part and the bracket 200. And the plurality of limiting parts is preferably rigid body.

The battery box 100 is also provided with a locking device 130 which can be changed between a locking state and an unlocking state, wherein the locking device 130 is used to cooperate with the bracket 200, in order to implement the locking of the battery box 100 with respect to the bracket 200. The battery box 100 is locked after being placed on the bracket 200, such that the fixation of the battery box 100 is more reliable. The locking device 130 is one part of the limiting part in X direction or the limiting part in Y direction or the limiting part in Z direction.

In this embodiment, the limiting part in X direction comprises the limiting part in front X direction 121X and the limiting part in rear X direction 122X. The limiting part in Y direction comprises the limiting part in front Y direction 121Y and the limiting part in rear Y direction 122Y The limiting part in Z direction comprises the limiting part in front Z direction 121Z and the limiting part in rear Z direction 122Z. The front and rear limiting parts can be respectively arranged at the front and back side of the box body 110, which the positioning is more reliable; moreover, for example, the limiting part in front Y direction 121Y can be used to limit the forward movement of the battery box 100 with respect to the bracket 200 in Y direction, and the limiting part in rear Y direction 122Y can be used to limit the backward movement of the battery box 100 with respect to the bracket 200 in Y direction.

Specifically, the locking device 130 is the limiting part in front Y direction 121Y. The locking device 130 comprises a locking bolt which can be elastically stretched out and retracted into the box body 110; when the locking bolt is elastically stretched out of the box body 110, the box locking device 130 is in the locking state. When the locking bolt is elastically retracted to the inside of the box body 110, the box locking device 130 is in the unlocking state.

The left side of the box body 110 is provided with a limiting part 121X in front X direction, a limiting part 121Y in front Y direction and a limiting part 121Z in front Z direction. Correspondingly, the right side of the box body 110 is also provided with a limiting part 121X in front X direction, a limiting part 121Y in front direction and a limiting part 121Z front Z direction; and both sides are symmetrical.

Fig. 22 shows an enlargement diagram of the limiting part in front X direction 121X, the limiting part in front Y direction 121Y and the limiting part in front Z direction 121Z in Fig. 21. As shown in Fig. 21 and Fig. 22, the limiting part in front X direction 121X is protruded to the left of the box body 115 of the box body 110, the limiting part in front Y direction 121Y (i.e. the locking device 130) is protruded to the left of the box body 115 of the box body 110 in the locking state, and the limiting part in front Z direction 121Z is protruded to the left of the box body 115 of the box body 110.

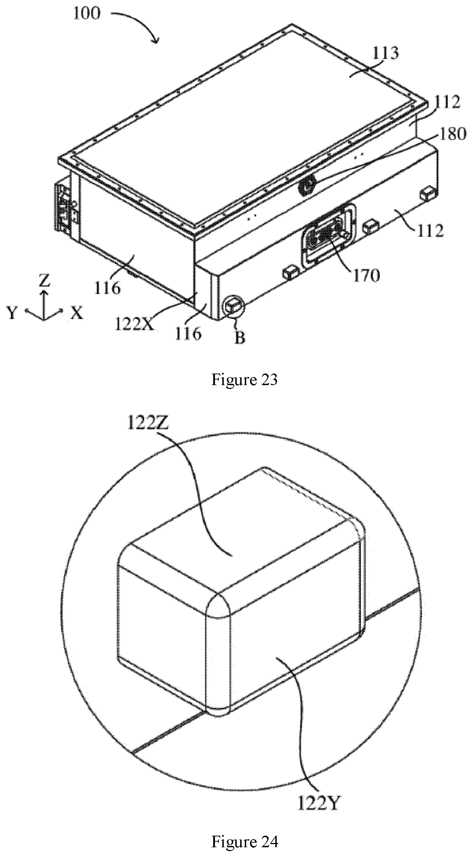

In addition, as shown in Fig. 23, the box body 110 as a limiting part in rear X direction 122X per se, undertakes the function of rear X-direction limitation. Specifically, the left side 115 and the right side 116 of the box body 110 are in contact with the corresponding limiting parts on the bracket 200 to implement the limitation in the left and right directions of the X-direction. In an alternative embodiment, the limiting part in rear X direction 122X can also be protruded to the box body 110.

Fig. 24 shows an enlarged diagram of the limiting part in rear Y direction 122Y and the limiting part in rear Z direction 122Z in Fig. 23. In this embodiment, the limiting part in rear Y direction 122Y and the limiting part in rear Z direction 122Z are integrated on the same convex part, i.e., on the rear YZ-direction limiting convex part. Specifically, the rear surface of the convex part is functioned as the rear Y-direction limitation, and the upper surface of the convex part is functioned as the rear Z-direction limitation. In an alternative embodiment, the limiting part in rear Y direction 122Y and the limiting part in rear Z direction 122Z can be configured separately. In this embodiment, the back of the box 112 of the battery box 100 is provided with four rear YZ-direction limiting convex parts.

In addition, as shown in Fig. 21, the battery box 100 is also provided with an unlocking device 140 and a safety locking device 150. The unlocking device 140 is used to link the locking device 130, in order to change the locking device 130 from the locking state to the unlocking state. It can implement fast locking and unlocking. Specifically, the unlocking device 140 comprises an unlocking sucker, an unlocking rod and a linkage mechanism, wherein the unlocking sucker is connected with the unlocking rod, and the unlocking rod is connected with the box locking device 130 through the linkage mechanism. The unlocking sucker is preferably an electromagnetic sucker, belongs to a press type (or an adsorption type) unlocking. Operating the electromagnetic sucker, driving the unlocking rod and the linkage mechanism, linking the box locking device 130 such that the locking bolt can be elastically retracted to the inside of the box body 110.

The safety locking device 150 is used to limit the change of the locking device 130 from the locking state to the unlocking state. To avoid the serious accident that the locking device 130 fails and the box body 110 slips due to the interference of external factors.

As shown in Fig. 23, the battery box 100 is also provided with an electrical connection device 170 and an explosion-proof valve 180. The electrical connection device 170 is used for electrical connection with the bracket 200. The electrical connection device 170 is arranged at the back side of the battery box 100. The explosion-proof valve 180 is used to connect the internal space of the box body 110 with the external when the pressure in the box body 110 reaches a threshold value. It can prevent the explosion caused by the excessive pressure in the box body 110, resulting in danger. The explosion-proof valve 180 is arranged on the back of the box 112.

Referring to Fig. 25, the battery box 100 is also provided with a guide rail 160, wherein the guide rail 160 is used for cooperating with the bracket 200. The guide rail 160 is arranged at the bottom of the battery box 100. The guide rail 160 extends in the Y direction. It is advantageous for the battery box 100 to slide into the bracket 200 in the Y direction. The battery box 100 is provided with a plurality of guide rails 160 which are arranged in parallel. Specifically, the battery box 100 is provided with two guide rails 160. The guide rail 160 is provided with a guide rib 161, and the extension direction of the guide rib 161 is same as the guide rail 160. The guide rib 161 can be cooperated with the groove arranged on the roller of the bracket 200, which facilitates the positioning of the battery box 100 with respect to the bracket 200. In this embodiment, only one of the guide rails 160 is provided with a guide rib 161.

In general, the battery box 100 is pushed into the bracket 200 from the front to the back along the Y direction (the direction of Y directed by arrow is backward in Fig, 26), and the guide rail 160 of the battery box 100 can be slid on the roller of the bracket 200, with less resistance; the limiting part in X direction, limiting part in Y direction and limiting part in Z direction are all cooperated with the bracket 200, in order to implement the limitation and lock in three directions; then, screw the safety locking device 150 and complete the fixation. When it is necessary to take out the battery box 100, screw the safety locking device 150 to unlock the safety lock.; operate the unlocking device 140 to keep the locking device 130 in the unlocking state; pull the battery box 100 to move from the back to the front along the Y direction; finally take out the battery box 100 from the bracket 200. The whole process is fast, accurate and highly automated.

### Embodiment 4

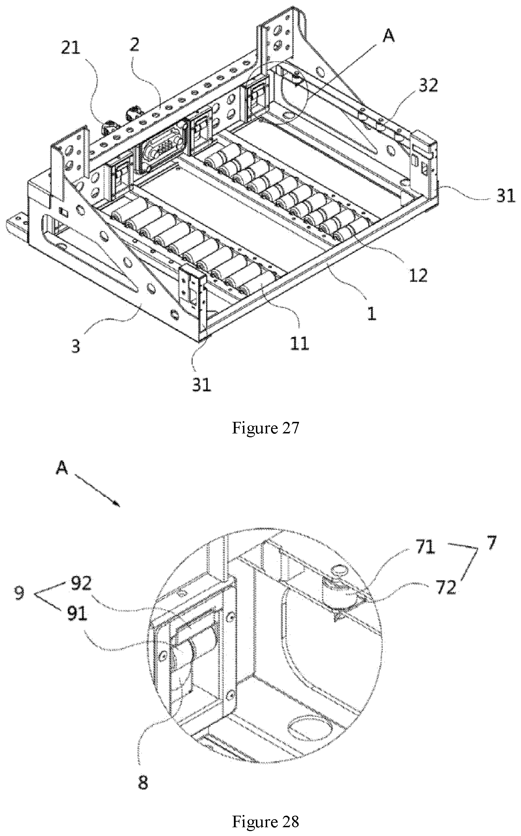

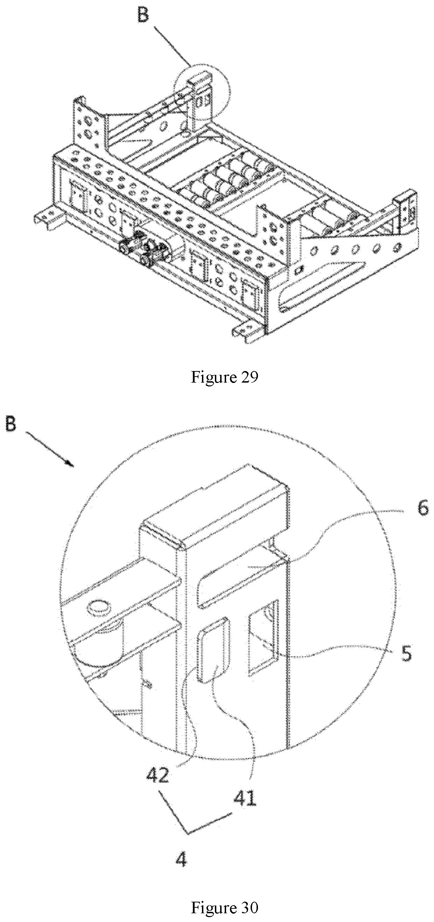

As shown in Fig. 27 to Fig. 30, this embodiment further provides a bracket on the basis of embodiment 1, which includes a bracket body and a bracket locking device. The bracket body comprises a base 1, a back-end wall 2 and two side walls 3, which together enclose a space for supporting and fixing objects, wherein the base 1 supports and fixes the lower part of the objects, and the back-end wall 2 supports and fixes the objects from the back side, and two side walls 3 support the objects from the side, and the front end of the bracket is an opening, and the objects can enter into the bracket from the front end of the bracket. The bracket locking device comprises a plurality of limiting parts arranged on base 1, back-end wall 2 and two side walls 3 respectively, so as to implement the flexible three-axis limitation function, such that the fixation of the object is more reliable and not loose, when the object needs to be connected with other external devices, there is no relative displacement between the joints and the bracket; when the object needs to be electrically connected with the external circuit, the electrical connection between the object and the external circuit is also stable and reliable., and there is no problem of poor contact due to the relative displacement between the brackets.

Wherein, the back-end wall 2 is vertically arranged at the back end of the bracket; two side walls 3 are vertically arranged at both sides of the bracket, and two side walls 3 are connected at two ends of the back-end wall 2; the limiting mechanism in X direction is arranged at two side walls 3 for X direction limitation; the limiting mechanism in Y direction is arranged at the back-end wall 2 and two side walls 3 for Y direction limitation; the limiting mechanism in Z direction is arranged at the back-end wall 2 and two side walls 3 for Z direction limitation; wherein, the X direction, Y direction and Z direction are perpendicular to each other. In the bracket of the present invention, multiple limiting mechanisms in X direction, limiting mechanisms in Y direction and limiting mechanisms in Z direction are respectively arranged on the base 1, back-end wall 2 and two side walls 3 of the bracket, in order to limit the relative displacement between the object and the bracket in the X direction, Y direction and Z direction, so as to implement the three-axis limitation function.

It should be noted that in the present invention, the X direction, Y direction and Z direction do not only refer to the length, width and height of the bracket, as long as the limiting direction of the three direction limiting mechanism arranged on the bracket is mutually perpendicular in X direction, Y direction and Z direction, even if such X direction, Y direction and Z direction has a certain angle with the three directions of the length, width and height of the bracket, which should also be considered to fall within the scope protected by the present invention. For the purpose of explanation only, the following will take the extension direction of the back-end wall of the bracket along the base as X direction, the extension direction of the side wall along the base as Y direction, and the extension direction perpendicular to the base as Z direction for example.

As a preferred embodiment of the present invention, in the bracket of this embodiment, the limiting mechanism in X direction comprises the limiting unit in front X direction 4 and the limiting unit in rear X direction 7, and the limiting mechanism in Y direction comprises the limiting unit in front Y direction 5 and the limiting unit in rear Y direction 8, and the limiting mechanism in Z direction comprises the limiting unit in front Z direction 6 and the limiting unit in rear Z direction 9; the limiting unit in front X direction 4, the limiting unit in front Y direction 5 and the limiting unit in front Z direction 6 are arranged at the front end of the two side walls 3; the limiting unit in rear X direction 7 is arranged on the two side walls 3; the limiting unit in rear Y direction 8 and the limiting unit in rear Z direction 9 are arranged on the back-end wall 2. In this preferred embodiment, the front end part of the bracket and the back-end part of the bracket are respectively provided with limiting units in three directions; wherein the limiting unit in front X direction 4, the limiting unit in front Y direction 5 and the limiting unit in front Z direction 6 limit the object in three-axis limitation from the side in the front end of the two side walls 3 of the bracket in the X direction, the Y direction and the Z direction, respectively, wherein the limiting unit in rear X direction 7, the limiting unit in rear Y direction 8 and the limiting unit in rear Z direction 9 limit the object in three-axis limitation from the side and back in the back end of the two side walls 3 and back-end wall 2 of the bracket in the X direction, the Y direction and the Z direction, respectively, such that the bracket can limit the object in three-axis limitation from the front end and the back end at the same time.

As a preferred embodiment of the present invention, in the bracket of this embodiment, the limiting unit in front X direction 4, the limiting unit in front Y direction 5 and the limiting unit in front Z direction 6 are arranged one-to-one, and the limiting unit in front X direction 4 and the corresponding limiting unit in front Y direction 5 are both located below the corresponding limiting unit in front Z direction 6. In this preferred embodiment, the limiting unit in front X direction 4, the limiting unit in front Y direction 5 and the limiting unit in front Z direction 6 are arranged one-to-one in groups, and the limiting unit in front Z direction 6 is arranged above the limiting unit in front X direction 4 and the limiting unit in front Y direction 5, which based on the limitation in X direction and the limitation in Y direction, the object is limited on the base 1 of the bracket from the upper part.

As a preferred embodiment of the present invention, in the bracket of this embodiment, the limiting unit in front X direction 4 comprises a gasket 41 and a spring piece 42, wherein the spring piece 42 is connected with the side wall 3, and the gasket 41 is connected with the spring piece 42. In this preferred embodiment, the limiting unit in X direction is a flexible limitation.

As a preferred embodiment of the present invention, in the bracket of this embodiment, the limiting unit in front Y direction 5 comprises a limiting slot in Z direction. In this preferred embodiment, the limiting unit in Y direction is a limiting slot in Z direction extending in Z direction, which is rectangular and has four round corners, so as to limit the object on the back-end wall 2.

As a preferred embodiment of the present invention, in the bracket of this embodiment, the limiting unit in front Y direction 5 also comprises a locking component. In this preferred embodiment, the locking component plays the role of reinforcing and locking the object in Y direction.

As a preferred embodiment of the present invention, in the bracket of this embodiment, the limiting unit in front Z direction 6 comprises a limiting slot in Y direction. In this preferred embodiment, the limiting unit in Z direction is a limiting slot in Y direction extending in Y direction, which is rectangular and has four round corners, so as to limit the object on two side walls 3.

As a preferred embodiment of the present invention, in the bracket of this embodiment, the limiting unit in rear X direction 7 comprises a pulley 71 and an elastic support 72, wherein the pulley 71 is pivoted on the side wall 3, and the elastic support 72 is arranged between the wheel surface of the pulley 71 and the side wall 3, and the rolling direction of the pulley 71 is Y direction. In this preferred embodiment, the limiting unit in rear X direction 7 is provided at different places from the limiting unit in rear Y direction 8 and the limiting unit in rear Z direction 9, which mainly uses the lateral pressing force of the limiting unit in rear X direction 7 to limit the position of the object from the two side walls 3, at the same time, the limiting unit in rear X direction also has the elastic pressing function, such that can implement the flexible limitation in X direction.

As a preferred embodiment of the present invention, in the bracket of this embodiment, the limiting unit in rear Y direction 8 and the limiting unit in rear Z direction 9 are set one-to-one correspondingly, and the limiting unit in rear Y direction 8 is located under the corresponding limiting unit in rear Z direction 9. In this preferred embodiment, the limiting unit in rear Y direction 8 and the limiting unit in rear Z direction 9 are matched one-to-one to form a limiting combination, wherein each pair of limiting unit in rear Y directions 8 and the limiting unit in rear Z direction 9 are configured to be spaced on the back-end wall 2, wherein the object is limited in Y direction and Z direction from the back side of the object.

As a preferred embodiment of the present invention, in the bracket of this embodiment, the limiting unit in rear Y direction 8 is a limiting convex in Y direction, and the limiting convex extends in Y direction. In this preferred embodiment, the limiting unit in rear Y direction 8 is a limiting convex which extends forward from the back-end wall 2 in Y direction, wherein the limiting convex can be made of soft elastic material, so as to generate an elastic force with the object.

As a preferred embodiment of the present invention, in the bracket of this embodiment, the limiting unit in rear Z direction 9 is a roller 91 and an elastic block 92, wherein the roller 91 is pivoted on the back-end wall 2, and the axis of the roller 91 extends in X direction, and the elastic block 92 is connected on the back-end wall 2 and is located above the roller 91. In this preferred embodiment, the limiting unit in rear Z direction 9 is also an elastic limiting part, wherein the elastic force is applied to the object in Z direction by using the roller 91 and the elastic block 92, so as to implement the elastic limitation function to the object.

As a preferred embodiment of the present invention, in the bracket of this embodiment, the front ends of the two side walls 3 are provided with a limiting holder 31, wherein the limiting unit in front X direction 4, the limiting unit in front Y direction 5 and the limiting unit in front Z direction 6 are arranged on the limiting holder 31. In this preferred embodiment, the limiting unit in front X direction 4, the limiting unit in front Y direction 5 and the limiting unit in front Z direction 6 are centrally arranged on the limiting holder 31, in order to facilitate the installation and replacement of the limiting unit in front X direction 4, the limiting unit in front Y direction 5 and the limiting unit in front Z direction 6.

As a preferred embodiment of the present invention, in the bracket of this embodiment, the base 1 comprises multiple groups of bottom guide wheels 11 groups arranged side by side, and multiple groups of bottom guide wheels 11 groups extend in a direction perpendicular to the back-end wall 2. In this preferred embodiment, the bottom guide wheel 11 groups can play a guiding role when the object is loaded from the front side.

As a preferred embodiment of the present invention, in the bracket of this embodiment, each guide wheel 11 of at least one group of bottom guide wheels 11 groups is provided with a guide groove 12 along the circumferential direction of the guide wheel 11, wherein each guide groove 12 is connected to form a guide rail which extends in a direction perpendicular to the back-end wall 2. In this preferred embodiment, the guide rail composed by multiple guide grooves 12 can not only be functioned as guiding in Y direction, but also be functioned as limiting in X direction.

As a preferred embodiment of the present invention, in the bracket of this embodiment, at least one side wall 3 comprises a side guide wheel group 32, wherein each side guide wheel group 32 extends in a direction perpendicular to the back-end wall 2. In this preferred embodiment, the side guide wheel groups 32 on the two side walls 3 are functioned as auxiliary guide.

As a preferred embodiment of the present invention, in the bracket of this embodiment, the back-end wall 2 is provided with an electrical connection device 21. In this preferred embodiment, the electrical connection device 21 of the back-end wall 2 is capable of quickly connecting and separating an object from an external circuit.

This embodiment also provides a battery box assembly, which includes: a battery box, a bracket as shown above; the battery box is connected with the bracket.

The bracket provided by the present invention and the battery box assembly with the bracket can implement the three-axis flexible limitation function, such that ensure that the bracket can load and take the objects smoothly and reliably when fixing objects, so as to make the connection between objects and other devices reliable.

In the description of the present invention, it is necessary to understand the terms 'Up', 'down', 'front', 'back', 'left', 'right', 'vertical', 'horizontal', 'top', 'bottom', 'inside', 'outside' and other indications are based on the direction or position relationship shown in the attached drawings, only for the convenience of describing the invention and simplifying the description, rather than indicating or implying that the device or components referred to must have a specific direction, be constructed and operated in a specific direction. This cannot be understood as a limitation of the present invention.

Although the specific embodiments of the present invention are described above, it should be understood by those skilled in the art that this is only an example, and the scope of protection of the present invention is defined by the appended claims. Those skilled in the art can make various changes or modifications to these embodiments without departing from the principles and essence of the present invention, but these changes and modifications fall into the scope of protection of the present invention.

## Claims

1. A battery box, which is **characterized in that** the battery box is provided with a box body and a box locking device arranged on the box body, wherein the box locking device can be changed between a locking state and an unlocking state, wherein the box locking device is used for coordinating with the bracket for mounting the battery box, in order to implement the locking of the battery box with respect to the bracket.

2. The battery box according to claim 1, wherein the box locking device comprises a locking bolt which can be stretched out and retracted into the box body elastically, wherein when the locking bolt is stretched out the box body elastically, the box locking device is in the locking state;
and/or, the battery box is also provided with an unlocking device, wherein the unlocking device is used to link the box locking device, in order to change the box locking device from the locking state to the unlocking state;
and/or, the battery box is also provided with a safety locking device, wherein the safety locking device is used for limiting the locking device to be changed from the locking state to the unlocking state;
and/or, the two opposite sides of the box body are both provided with the box locking device.

3. The battery box according to claim 2, wherein the unlocking device comprises an unlocking sucker, an unlocking rod, and a linkage mechanism, wherein the unlocking sucker is connected with the unlocking rod, wherein the unlocking rod is connected with the box locking device through the linkage mechanism.

4. The battery box according to claim 2, wherein the safety locking device comprises a rotating shaft, wherein the rotating shaft is connected with the box locking device.

5. The battery box according to at least one of claims 1-4, wherein the battery box is also provided with a plurality of box liming parts, wherein the box limiting parts are used to cooperate with the bracket for mounting the battery box, and wherein after the battery box is mounted to the bracket, the box limiting parts are used to limit the movement of the battery box in multiple directions with respect to the bracket;
preferably, the box limiting parts comprises a box limiting part in front X direction and a box limiting part in front Z direction, wherein after the battery box is mounted to the bracket, the box limiting part in front X direction is used to limit the battery box to move in X direction with respect to the bracket, wherein the box limiting part in front Z direction is used to limit the battery box to move in Z direction with respect to the bracket, and wherein the X direction is perpendicular to the Z direction;
preferably, the box limiting part in front X direction and the box limiting part in front Z direction are both convex parts, and wherein the box limiting part in front X direction and the box limiting part in front Z direction are both arranged on the side of the box body.

6. The battery box according to claim 5, wherein the two opposite sides of the box body are both provided with the box limiting part in front X direction and the box limiting part in front Z direction;
and/or, the box limiting part in front Z direction is a cylinder, wherein the end part of the cylinder is fixed at the side of the box body.

7. The battery box according to claim 5, wherein the box limiting part comprises a box limiting part in rear YZ direction, wherein after the battery box is mounted on the bracket, the box limiting part in rear YZ direction is used to limit the battery box to move in Y direction and Z direction with respect to the bracket, and wherein the Y direction is perpendicular to the Z direction;
preferably, the box limiting part in rear YZ direction is a convex part, and wherein the box limiting part in rear YZ direction is arranged at the back side of the box body.

8. The battery box according to claim 5, wherein the box limiting parts are rigid bodies.

9. The battery box according to claim 1, wherein the battery box comprises an electrical connector, wherein the electrical connector comprises an electrical connector vehicle side arranged on the bracket and an electrical connector battery side arranged on the box body, wherein the electrical connector vehicle side comprises a high-voltage pole, and the electrical connector battery side comprises a high-voltage terminal, and wherein at least one conductive elastomer is configured to be pressed between the high-voltage pole and the high-voltage terminal.

10. The battery box according to claim 1, wherein the battery box also includes a plurality of limiting parts arranged on the box body, wherein the limiting parts are used to cooperate with the bracket for mounting the battery box, in order to implement the limitation of the battery box with respect to the bracket, wherein the plurality limiting parts includes:
a limiting part in X direction, which is used to limit the battery box to move in X direction with respect to the bracket;
a limiting part in Y direction, which is used to limit the battery box to move in Y direction with respect to the bracket; and
a limiting part in Z direction, which is used to limit the battery box to move in Z direction with respect to the bracket;
wherein, the X direction, Y direction and Z direction are perpendicular to each other.

11. The battery box according to claim 10, wherein the limiting part in X direction comprises a limiting part in front X direction and a limiting part in rear X direction; wherein the limiting part in Y direction comprises a limiting part in front Y direction and a limiting part in rear Y direction; and wherein the limiting part in Z direction comprises a limiting part in front Z direction and a limiting part in rear Z direction;
and/or, the limiting part is configured to be protruded to the box body.

12. The battery box according to claim 11, wherein the plurality of limiting parts is all rigid body.

13. The battery box according to claim 10, wherein the locking device is one part of the limiting part in X direction, the limiting part in Y direction or the limiting part in Z direction;
and/or, the battery box is also provided with an unlocking device, wherein the unlocking device is used to link the locking device, in order to change the locking device from the locking state to the unlocking state;
and/or, the battery box is also provided with a safety locking device, wherein the safety locking device is used to limit the locking device to be changed from the locking state to the unlocking state.

14. The battery box according to at least one of claims 10-13, wherein the battery box is also provided with guide rail, the guide rail is used to cooperate with the bracket;
preferably, the guide rail is arranged at the bottom of the battery box.

15. The battery box according to claim 14, wherein the guide rail is extended in Y direction;
and/or, the battery box is provided with a plurality of guide rails, wherein the plurality of guide rails is arranged in parallel;
and/or, the guide rail is provided with a guide rib, wherein extending direction of the guide rib is the same as the guide rail.

16. The battery box according to at least one of claims 10-15, wherein the battery box is also provided with an electrical connection device, wherein the electrical connection device is used to be electrical connected with the bracket;
preferably, the electrical connection device is arranged at the back side of the battery box.

17. The battery box according to at least one of claims 10-16, wherein the battery box is provided with an explosion-proof valve, wherein the explosion-proof valve is used to connect the internal space of the box body with the external when the pressure in the box body reaches a threshold value;
and/or, the box body is a sheet metal part.

18. A bracket for mounting the battery box, which is **characterized in that** the bracket is provided with a bracket body and a bracket locking device arranged on the bracket body, wherein the bracket locking device is used to cooperate with the battery box, in order to implement the locking of the battery box with respect to the bracket.

19. The bracket according to claim 18, wherein the bracket locking device is a groove arranged on the bracket body;
and/or, two opposite inner sides of the bracket body are both provided with the bracket locking device.

20. The bracket according to claim 18 or 19, wherein the bracket is also provided with a plurality of bracket limiting parts for cooperating with the battery box, wherein after the battery box is mounted to the bracket, the bracket limiting parts are used to limit the movement of the battery box with respect to the bracket in multiple directions;
preferably, the bracket limiting part comprises a bracket limiting part in front X direction and a bracket limiting part in front Z direction, wherein after the battery box is mounted to the bracket, the bracket limiting part in front X direction is used to limit the battery box to move in X direction with respect to the bracket, wherein the bracket limiting part in front Z direction is used to limit the battery box to move in Z direction with respect to the bracket, and wherein the X direction is perpendicular to the Z direction;
preferably, the bracket limiting part in front X direction comprises the bracket elastic part in front X direction, wherein the bracket elastic part in front X direction is configured to be protruded to the bracket body; the limiting part in front Z direction comprises the bracket groove in front Z direction and the bracket elastic part in front Z direction arranged in the bracket groove in front Z direction; the bracket elastic part in front X direction and the bracket elastic part in front Z direction are both used to be pressed contacting with the battery box;
preferably, two opposite inner sides of the bracket body are all provided with the bracket limiting part in front X direction and the bracket limiting part in front Z direction.

21. The bracket according to claim 20, wherein the bracket limiting part comprises a bracket limiting part in rear X direction, wherein the bracket limiting part in rear X direction is used to limit the battery box to move in X direction with respect to the bracket;
preferably, the bracket limiting part in rear X direction comprises a bracket limiting roller in rear X direction, wherein the bracket limiting roller in rear X direction is used to be pressed contacting with the battery box.

22. The bracket according to claim 20, wherein the bracket limiting part comprises a bracket limiting part in rear YZ direction, wherein after the battery box is mounted to the bracket, the bracket limiting part in rear YZ direction is used to limit the battery box to move in Y direction and Z direction with respect to the bracket, wherein the Y direction is perpendicular to the Z direction;
preferably, the bracket limiting part in rear YZ direction comprises a bracket groove in rear YZ direction and a bracket limiting part in rear Y direction and a bracket limiting part in rear Z direction arranged in the bracket groove in rear YZ direction, wherein the bracket limiting part in rear Y direction and the bracket limiting part in rear Z direction are used to be pressed contacting with the battery box;
preferably, the bracket limiting part in rear Y direction comprises a bracket elastic part in rear Y direction, wherein the bracket limiting part in rear Z direction comprises a bracket limiting roller in rear Z direction, wherein the bracket elastic part in rear Y direction and the bracket limiting roller in rear Z direction are used to be pressed contacting with the battery box.

23. The bracket according to claim 22, wherein the bracket limiting part in rear YZ direction is arranged at the inner back side of the bracket body.

24. The bracket according to claim 18, wherein,
the bracket body includes:
a base;
a back-end wall, wherein the back-end wall is vertically arranged at the back side of the bracket;
two side walls, wherein the two side walls are vertically arranged at two sides of the bracket, and wherein the two side walls are connected with two ends of the back-end wall;
the bracket locking device includes:
a limiting mechanism in X direction, wherein the limiting mechanism in X direction is arranged at the two side walls and is used for limiting in X direction;
a limiting mechanism in Y direction, wherein the limiting mechanism in Y direction is arranged at the back-end wall and two side walls and is used for limiting in Y direction;
a limiting mechanism in Z direction, wherein the limiting mechanism in Z direction is arranged at the back-end wall and two side walls and is used for limiting in Z direction limitation;
wherein, X direction, Y direction and Z direction are perpendicular to each other.

25. The bracket according to claim 24, wherein the limiting mechanism in X direction comprises a limiting unit in front X direction and a limiting unit in rear X direction, wherein the limiting mechanism in Y direction comprises a limiting unit in front Y direction and a limiting unit in rear Y direction, and wherein the limiting mechanism in Z direction comprises a limiting unit in front Z direction and a limiting unit in rear Z direction;
the limiting unit in front X direction, the limiting unit in front Y direction and the limiting unit in front Z direction are arranged on the front side of the two side walls; wherein the limiting unit in rear X direction is arranged on two side walls; wherein the limiting unit in rear Y direction and the limiting unit in rear Z direction are arranged on the back-end wall.

26. The bracket according to claim 25, wherein the limiting unit in front X direction, the limiting unit in front Y direction and the limiting unit in front Z direction are configured to be correspondingly one-on-one, wherein the limiting unit in front X direction and the corresponding limiting unit in front Y direction are both located below the corresponding limiting unit in front Z direction;
and/or, the limiting unit in front X direction comprises a gasket and a spring piece,
wherein the spring piece is connected with the side wall, and the gasket is connected with the spring piece;
and/or, the limiting unit in front Y direction comprises limiting groove in Z direction.

27. The bracket according to claim 26, wherein the limiting unit in front Y direction also comprises a locking component.

28. The bracket according to claim 25, wherein the limiting unit in front Z direction comprises a limiting slot in Y direction;
and/or, the limiting unit in rear X direction comprises a pulley and an elastic support, wherein the pulley is pivoted on the side wall, wherein the elastic support is arranged between the wheel surface of the pulley and the side wall, and wherein the rolling direction of the pulley is Y direction;
and/or, the limiting unit in rear Y direction and the limiting unit in rear Z direction are configured to be correspondingly one-on-one, wherein the limiting unit in rear Y direction is located below the corresponding limiting unit in rear Z direction;
and/or, the limiting unit in rear Y direction is a limiting convex in Y direction, wherein the limiting convex is extended in Y direction;
and/or, the limiting unit in rear Z direction is a roller and an elastic block, wherein the roller is pivoted on the back-end wall, wherein the axis of the roller is extended in X direction, and wherein the elastic block is connected on the back-end wall and is located above the roller.

29. The bracket according to claim 24, wherein the front end of the two side walls is provided with a limiting holder, wherein the limiting unit in front X direction, the limiting unit in front Y direction and the limiting unit in front Z direction are arranged on the limiting holder;
and/or, the base comprises a plurality of groups of bottom guide wheel groups arranged side by side, wherein the plurality of groups of bottom guide wheel groups is extended in the direction perpendicular to the back-end wall;
and/or, at least one of the side walls comprises a side guide wheel group, wherein each side guide wheel group is extended in a direction perpendicular to the back-end wall;
and/or, the back-end wall is provided with an electrical connection device.

30. The bracket according to claim 29, wherein each guide wheel of at least one of the bottom guide wheel group is provided with a guide groove along the circumferential direction of the guide wheel, wherein each guide groove is connected to form a guide rail, and wherein the guide rail is extended in a direction perpendicular to the back-end wall.

31. A battery box assembly, which is **characterized in that** it comprises a battery box as described in at least one of claims 1-9 and a bracket as described in at least one of claims 18-23, wherein the box locking device is cooperated with the bracket locking device.
